# EUROPEAN PATENT SPECIFICATION

(11) **EP 3 985 890 B1**
(45) Date of publication and mention of the grant of the patent: **19.03.2025**
(21) Application number: 21192327.1
(22) Date of filing: 20.08.2021
(51) Int. Cl.: H04J 3/06, H04Q 9/04, H04L 12/40

(54) **PHYSICAL LAYER DEVICE WITH PRECISION TIMING**
VORRICHTUNG FÜR PHYSIKALISCHE SCHICHTEN MIT PRÄZISER ZEITSTEUERUNG
DISPOSITIF DE COUCHE PHYSIQUE AVEC SYNCHRONISATION DE PRÉCISION

(30) Priority: 15.10.2020 US 202017071987
(43) Date of publication of application: 20.04.2022
(73) Proprietor: NXP B.V., 5656 AG Eindhoven (NL)
(72) Inventor: Adrian, Andrew, 5656 AG Eindhoven (NL)
(74) Representative: Schmütz, Christian Klaus Johannes

(56) References cited:
- EP-A1- 3 614 687
- WO-A1-2019/087591
- US-A1- 2017 135 053
- BUHR SIMON ET AL: "A Real-Time Fast Ethernet Transceiver achieving Sub-ns Time Synchronization", 2019 IEEE NORDIC CIRCUITS AND SYSTEMS CONFERENCE (NORCAS): NORCHIP AND INTERNATIONAL SYMPOSIUM OF SYSTEM-ON-CHIP (SOC), IEEE, 29 October 2019 (2019-10-29), pages 1 - 7, XP033662786, DOI: 10.1109/NORCHIP.2019.8906965
- DAVID ROSSELOT ED - ANONYMOUS: "Simple, Accurate Time Synchronization in an Ethernet Physical Layer Device", INFORMATION SCIENCES AND SYSTEMS, 2007. CISS '07. 41ST ANNUAL CON FERENCE ON, IEEE, PI, 1 October 2007 (2007-10-01), pages 123 - 127, XP031161290, ISBN: 978-1-4244-1063-7
- RENESAS: "Industrial Ethernet PHY:Single PHY ASSP User Manual uPD60610 uPD60611", 9 April 2013 (2013-04-09), pages 1 - 109, XP093156800, Retrieved from the Internet <URL:https://www.renesas.com/us/en/document/mah/industrial-ethernet-physingle-phy-assp-users-manualupd60610upd60611>
- TOMASZ WLOSTOWSKI: "Master of Science thesis: Precise time and frequency transfer in a White Rabbit network", 1 January 2010 (2010-01-01), Warsaw, pages 1 - 98, XP093156924, Retrieved from the Internet <URL:https://white-rabbit.web.cern.ch/documents/Precise_time_and_frequency_transfer_in_a_White_Rabbit_network.pdf>
- TOMASZ WLOSTOWSKI: "Master of Science thesis: Precise time and frequency transfer in a White Rabbit network", 1 January 2010 (2010-01-01), Warsaw, pages 1 - 98, XP093156924, Retrieved from the Internet <URL:https://white-rabbit.web.cern.ch/documents/Precise_time_and_frequency_transfer_in_a_White_Rabbit_network.pdf>

## Description

### BACKGROUND

Time Sensitive Networking (TSN) is pursued to allow new functionality in mobile and stationary networks. Some networks use GNSS (Global Navigation Satellite System, such as GPS (Global Positioning System)) receivers at each network node to provide a uniform time standard. However, even with multiple GNSS receivers for time synchronization, there may be variations in processing, storing, and propagating a precise timing signal at different nodes. Time synchronization standards and protocols are being established such as IEEE-1588, which defines a precision time protocol (PTP and gPTP) for local and metropolitan area networks. IEEE-1588 is intended to synchronize multiple connected computers to a computer that serves as a PTP Grandmaster clock to within 100ns using Ethernet. IEEE 802.1AS (Timing and Synchronization for Time-Sensitive Applications in Bridged Local Area Networks) provides profiles to support PTP between network nodes.

PTP enables new functions for stationary and mobile networks at lower cost than using multiple GNSS receivers. One or a few GNSS receivers may be used and then PTP may be used to synchronize intermediate nodes. Precise timing allows for simultaneous data throughout a vehicle or between different vehicles to be accurately compared. This opens up new capabilities for cooperation between various electronic control units (ECUs) that implement, for example, engine control, powertrain control, airbag systems, antilock brake systems, cruise control, electric power steering, audio systems, window control systems, door control systems, mirror adjustment systems, and battery and recharging systems. Newer automotive systems that support connected operation or connected autonomous operation are requiring GNSS receivers for time synchronization. Within the vehicle, this can entail several modules that need to be time synchronized to output a pulse at the beginning of each new second of GNSS time.

The journal article "A real-time fast ethernet transceiver achieving sub-ns time synchronization" by Simon Buhr et al, 29 October 2019; DOI: 10.1109/NORCHIP.2019.8906965; discloses sub-ns time synchronization implemented in a real-time Fast Ethernet physical layer (PHY) chip. The chip is fabricated in a 180nm technology of GLOBALFOUNDRIES. The PHY supports timestamping of ingress and egress frames with a resolution of 500ps. The PHY comprises a 125 MHz clock and a phase selection that is controlled via a management data input/output interface. Measurement results demonstrate the synchronization between two PHYs connected by up to 100m long category 5 unshielded twisted pair cables. The time difference has a standard deviation of only 176ps and a mean offset of 50.4ps. Asymmetries in the cable are compensated by a simple calibration algorithm that is run at startup of the link within 1s.

### SUMMARY

The invention is defined by the independent claims 1 and 11. Further embodiments are defined by the dependent claims.

A physical layer device is described with a precision timing. The timing may be applied to time stamps and to a signal output. In an embodiment, a physical layer (PHY) device for a network includes a transmitter configured to transmit data at the PHY device from a host to an external network that is external to the PHY device, a host interface configured to receive the data to transmit from the host and configured to receive configuration commands from the host, a clock independent of a host clock and coupled to the host interface to receive phase and frequency adjustments as configuration commands from the host to thereby adjust the phase and frequency of the clock based on the received configuration commands, a modulus counter configured to count a preconfigured number of timing pulses of the clock, and a timing output interface coupled to the modulus counter to produce a precision timing output signal based on detecting the preconfigured number of timing pulses of the clock.

In an embodiment, the timing output interface is configured to be coupled to an end node and wherein there is a propagation delay of the precision timing output signal from the timing output interface to the end node and wherein the timing output interface is configured to be coupled to the host interface to receive a phase adjustment as a configuration command from the host to thereby compensate for the propagation delay.

In an embodiment, the modulus counter is further configured to determine a timing duration for the precision timing output signal.

In an embodiment, the timing duration is one second and the output timing signal is a one pulse per second (1PPS) timing reference signal.

In an embodiment, the modulus counter is coupled to the host interface to receive a modulus adjustment as a configuration command from the host.

In an embodiment, the clock further comprises a phase-locked loop and a timer/counter,

An embodiment further comprises a device phase-locked loop coupled to the transmitter and the host interface wherein the PLL is configured provide a timing source that is independent of the clock of the PHY device to thereby align the timing of the transmitter and the host interface.

In an embodiment, the PHY device is configured to be coupled to a grandmaster clock and the phase and frequency adjustments from the host are generated by the host based on a precision timing protocol conducted through the PHY device between the host and the grandmaster clock.

In an embodiment, the phase and frequency adjustments are received on a serial media-independent interface.

In an embodiment, the host interface comprises a system management interface and wherein the phase and frequency adjustments are received through the system management interface as parameter adjustments to thereby adjust the phase and frequency of the clock.

The PHY device further comprises a time stamping engine coupled to the clock and configured to apply a time stamp to the data transmitted by the transmitter based on the clock

In an embodiment, the transmitter comprises a front-end/hybrid, a transmit physical medium attachment and a transmit physical coding sublayer coupled to the time stamping engine and the host data interface.

An embodiment further comprises a receiver configured to receive data at the PHY device from the external network and provide the data to the host data interface and wherein the time stamping engine is further configured to apply a time stamp to the data received by the receiver based on the clock.

An embodiment includes a method of determining timing on a network that includes transmitting data to network nodes from a PHY device, receiving data from the network nodes at the PHY device, applying a clock of the PHY device to a modulus counter of the PHY device configured to count a preconfigured number of timing pulses of the clock, generating a precision output timing signal based on detecting the preconfigured number of timing pulses of the clock, transmitting the precision output timing signal to external nodes external to the PHY device, receiving phase and frequency adjustments as configuration commands at the PHY device from the host through a host interface and adjusting the phase and frequency of the clock based on the received configuration commands.

The clock of the PHY device is independent of a host clock.

An embodiment further comprises advancing the precision output timing signal in response to a configuration command from the host through the host interface.

The method further comprising time stamping the transmitted data based on the clock of the PHY device, time stamping the received data based on the clock of the PHY device, transmitting the time stamped received data to the host through the host interface.

An embodiment includes a subsystem with precision timing comprising a host, a sensor coupled to the host and configured to provide sensor data to the host, and a physical layer (PHY) device having a receiver to receive data from a network, a host interface configured to transmit data received from the network to the host and to receive sensor data from the host to transmit to the network, the host interface further configured to receive configuration commands from the host, and a time stamping engine having a time stamping clock and configured to apply a time stamp to the data received by the receiver based on the time stamping clock and to apply a time stamp to sensor data transmitted to the network based on the time stamping clock, wherein the time stamping clock is coupled to the host interface to receive phase and frequency adjustments as configuration commands from the host.

In an embodiment, the PHY device further comprises a timing output interface coupled to the time stamping clock to produce a precision timing output signal based on the time stamping clock and coupled to the sensor to provide the precision timing output signal to the sensor.

In an embodiment, the host performs a precision timing protocol to determine phase and frequency adjustment to send to the time stamping clock.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 is a diagram of an in-vehicle network that includes multiple nodes with I/O (Input/Output) devices suitable for an in-vehicle network with precision timing.
Fig. 2 is a block diagram of an example subsystem of an in-vehicle network with multiple precision-timed nodes and an Ethernet PHY device.
Fig. 3 is a block diagram of an Ethernet PHY device for network data communications including a time stamping engine.
Fig. 4 is a block diagram of a time stamping engine suitable for an Ethernet PHY device.
Fig. 5 is a process flow diagram of a method of operating a PHY device on a communications network that uses a time stamping engine.
Fig. 6 is a process flow diagram of a method of operating a PHY device on a communications network with a precision output timing signal.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from essential characteristics as defined in the independent claims. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

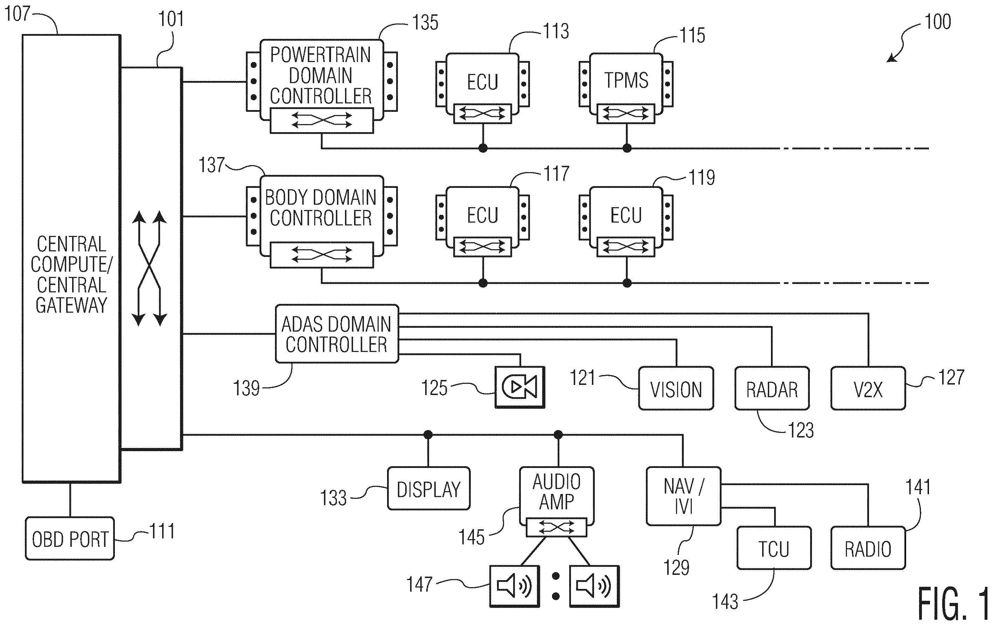

Fig. 1 depicts an example of an in-vehicle network 100 suitable for use with the present invention and incorporating multiple nodes and I/O (Input/Output) devices as described herein. The I/O devices may be packet data switches based on Ethernet or another packet data protocol. Alternatively, one or more of the I/O devices may be physical layer interfaces such as a PHY device. The automotive system includes packet data switches integrated into ECUs (Electronic Control Units) distributed throughout the vehicle. Alternatively, one or more of the switches may be independent of an ECU. As shown, a central compute/central gateway 107 includes a gateway switch 101 that is coupled to other devices and controllers. The central compute/central gateway 107 is further coupled to an OBD (On-Board Diagnostics) port 111 for external maintenance, control, and monitoring.

The central compute/central gateway 107 is coupled through the gateway switch 101 to a powertrain domain controller 135, a body domain controller137, and an ADAS (Advanced Driver Assistance System) domain controller 139. As examples, the powertrain domain controller 135 is coupled through its packet data switch to an ECU 113, such as an engine management unit, and a TPMS (Tire Pressure Monitoring System) module 115. Other nodes may also be coupled to the powertrain domain controller 135. The body domain controller 137 is coupled through its packet data switch to two or more other body control ECUs 117, 119 such as for steering and brakes. The ADAS domain controller 139 does not have an integral packet data switch but may have an integrated PHY device (not shown) to pass data directly to a variety of sensors such as vision 121, radar 123, LIDAR 125, and a V2X 127, such as a vehicle DSRC (Digital Short Range Communication) radio for communicating with other vehicles and roadside objects.

A navigation and in-vehicle infotainment system (NAV/IVI) 129 may also be coupled to the gateway switch 101. This system may include connection through its own data interfaces (not shown) to a TCU (Telematics Control Unit) 143 that may include inertial sensors and satellite positioning receivers, a radio 141 and other entertainment signal sources. An audio amplifier 145 is coupled to the gateway switch 101 and to a loudspeaker system 147 through an additional packet data switch of the audio amplifier 145. One or more displays 133 are coupled to the gateway switch 101 and may also offer user input through touchscreen and physical button and switch interfaces.

In some embodiments, a packet data switch may be configured as part of an ECU or other component as a system on a chip (SoC), system in a package (SiP), or in any other suitable way. The packet data switches connect the processors, such as the ECUs and central compute/central gateway 107 and memory to multiple nodes of which several examples are shown. However, more or fewer nodes of more or different types may be used in the system.

Packet data switches may be used to allow each node to communicate with one or more processors, sensors, input, and each output devices. Some of the connections are direct and some of the connections are indirect. Data storage may be incorporated into the processors, on die or on package, or into other nodes and each node may include data storage. Packet data switches also allow other nodes that are not coupled to an ECU to communicate without the expense of an integrated or separate connected packet data switch. Other devices on the network may communicate using only a physical device interface such as an Ethernet PHY (physical layer) device.

Ever more automotive sensors and other nodes are proposed and with this increasing complexity and an increasing desire for autonomous driving, it is increasingly expensive to assure fast reliable operation. Some of the reliability is ensured by providing reliable precision timing across the network. While a packet data switch may be used to generate and synchronize clocks, providing a switch at every network node is expensive and increases power consumption. Using a PHY device when possible, may reduce cost and size for each such node.

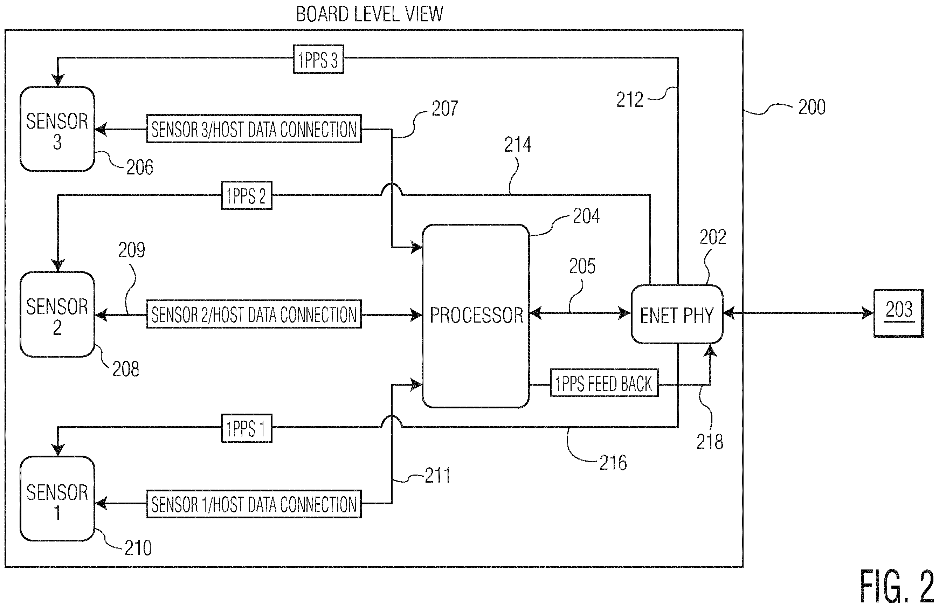

Fig. 2 is a block diagram of an example subsystem suitable for an automotive or stationary context. The components are mounted to a circuit board 200 which may contain additional lines and components (not shown) such as power supply, passive components, and isolation and security components. An Ethernet PHY device 202 is mounted to the circuit board 200 together with a processor 204, such as a host processor or application processor that operates as a host, and some end nodes 206, 208, 210 shown in this diagram as three sensors. The processor 204 may include an instruction processor and a memory or storage medium to execute computer-readable instructions that are stored in the memory. The end nodes may be vision, radar, lidar, or optical sensors, position or attitude sensors, or any of a variety of other sensors suitable for an automotive environment. Alternatively, the end nodes 206, 208, 210 may be actuators, transceivers, interfaces, or any other suitable end node. While three end nodes are shown, there may be more or fewer to suit different implementations.

The processor 204 communicates with each end node 206, 208, 210 through a respective data connection 207, 209, 211 which may use any suitable serial or parallel data interface, depending on the nature of the sensor. For a camera, the processor 204 may send command and control information to the end node 206 through the data connection 207 and receive image data through the same data connection. The type of information that is provided may depend on the particular type of end node.

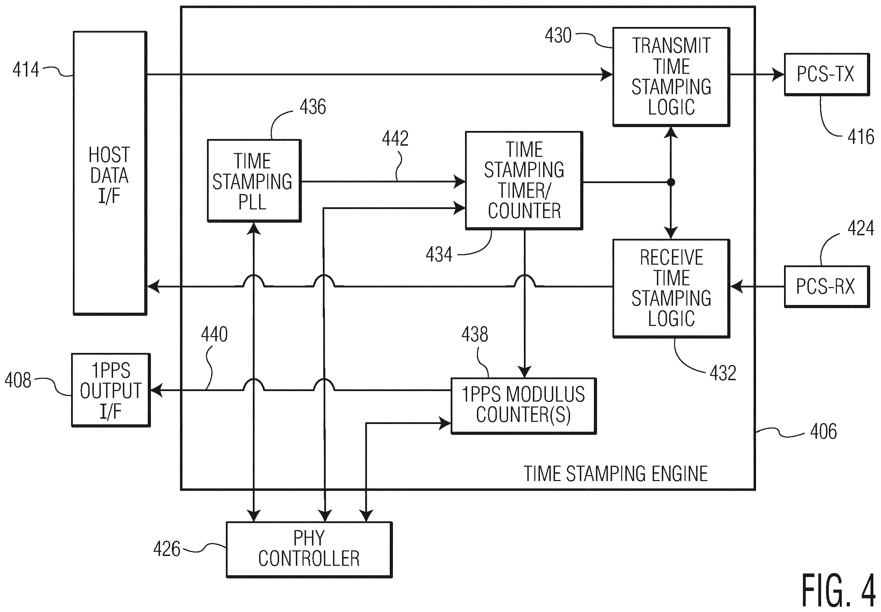

The processor 204 is also coupled to the Ethernet PHY device 202 with a data connection 205 to send and receive data and timing through the Ethernet PHY device 202 to and from an external network 203. The data may be sensor data, command and control information, operations, administration, and maintenance (OAM) data, or any other suitable data. The Ethernet PHY device 202 has a time stamping engine, such as time stamping engine 406 of Fig. 4, to stamp incoming and outgoing packets and data streams with a time determined by a clock, such as time stamping timer/counter 434 of Fig. 4, within the Ethernet PHY device 202.

The Ethernet PHY device 202 also produces a precision timing signal as an output signal based on the clock within the Ethernet PHY device 202, such as a 1PPS (One Pulse per Second) signal. Three different precision timing output signals on each of three different 1PPS signal lines 212, 214, 216 may be sent, each to a different end node with different phase or delay. Alternatively, the same 1PPS signal may be provided to one or more of the end nodes 206, 208, 210 and may be applied to any one or more of the end nodes, each through a separate 1PPS signal line 212, 214, 216. Additional nodes (not shown) may also be coupled to the processor without receiving a 1PPS signal. The precision timing of the 1PPS signal may be used to synchronize output data between devices or to coordinate action between devices. As an example, if there are two cameras with different external views then, by synchronizing images to a common timing reference, changes between images may be correlated to track motion between the two camera views. There are many other applications for precision timing.

The processor 204 may be programmed to determine the meaning of received messages and to generate appropriate outgoing messages and return messages. In some embodiments, the processor 204 may include, for example, software applications that are stored in memory of the processor and executed by processing circuits of the processor. The processor operates as a host and may also be implemented as a digital signal processor (DSP), central processing unit (CPU) or microcontroller and may be implemented as a single unit as shown or as multiple units. In an embodiment, the processor 204 implements data link layer (i.e., Layer 2) operations which, in an Ethernet-based network, may include Logical Link Control (LLC) sublayer operations and/or media access control (MAC) sublayer operations.

The processor 204 receives data from the end nodes 206, 208, 210 that are regulated by the precision timing output signal received in each 1PPS signal line 212, 214, 216 at each node, respectively. The processor 204 may use the received end node data with precision timing information received from the external network 203 to provide timing and phase adjustments and absolute timing, among other controls, to the clock within the Ethernet PHY device 202 through a timing feedback line 218 from the processor 204 to the Ethernet PHY device 202. The processor 204 has control of the Ethernet PHY device 202 such that it can adjust the operating parameters of the Ethernet PHY device 202, using Serial Media-Independent Interface (SMII), System Management Interface (SMI) or another suitable interface. The processor may also receive precision timing information from a grandmaster clock located on the circuit board 200 or connected to the processor 204 through the external network 203. In some embodiments, the processor is running PTP (Precision Time Protocol) or gPTP per IEEE Std 1588^{™} or IEEE Std 802.1AS^{™}. In some embodiments, the timing feedback line 218 is connected to the external network, so that other Ethernet connected devices that are running PTP or gPTP can control the Ethernet PHY device 202.

The Ethernet PHY device 202 is able to output a 1PPS signal based on the clock within the Ethernet PHY device 202 that may be time synchronized to any of a variety of different sources. In some embodiments, the signal is synchronized to a GNSS receiver. In some embodiments, the signal is synchronized to a grandmaster clock that is received through an IEEE 1588-compliant signal. Other clock sources may alternatively be used. The output 1PPS signal, or other precision timing reference signal, is needed by some remotely controlled electronics and sensor modules to generate time stamps and time synchronized outputs.

Current implementations of common precision timing protocols require an applications processor co-located with each timed device, or end node as described above, to extract a timing reference signal such as the 1PPS signal. In some cases, an Ethernet switch with an integrated processor may be used, however, the switch must also be co-located with the timed device. The additional application processor to generate the 1PPS signal may raise the cost, heat, and power consumption of precision timing. As described in more detail below, the Ethernet PHY device provides precision timing using only a simple clock that is controlled by the host.

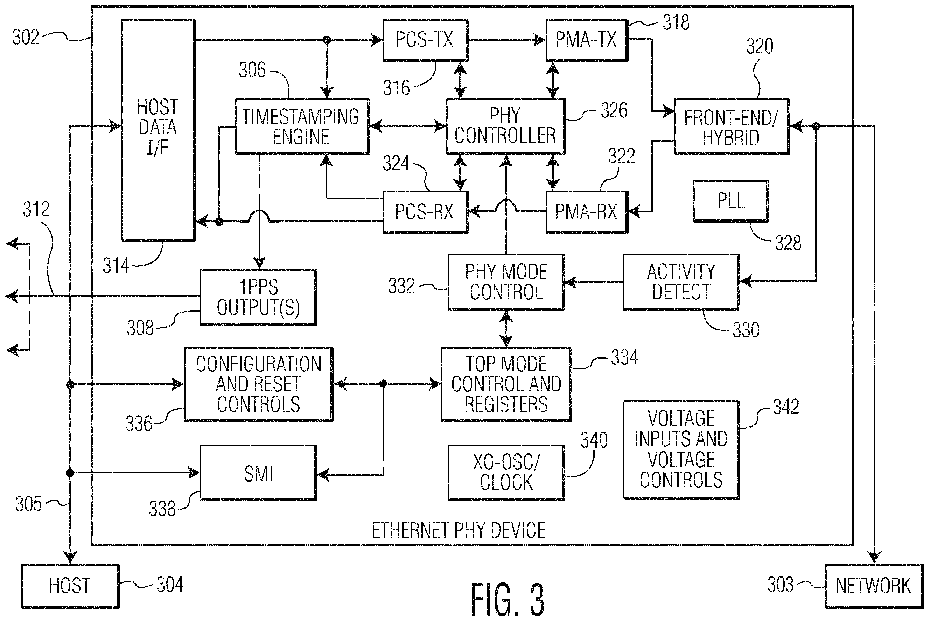

Fig. 3 is a block diagram of an Ethernet PHY device 302 for data communications, and may represent the Ethernet PHY device 202 of Fig. 2. While the device is described as an Ethernet PHY device, it may also support other package or data protocols and formats and may be adapted to other data communication purposes while still providing precision timing as described herein. The Ethernet PHY device 302 has a front end/hybrid 320 coupled to the network 303 and a host data interface 314, coupled to a host 304 through a data link 305. The host may be implemented as a processor 204 as shown in Fig. 2 or another type of host processor or application processor. Alternatively, the host may be a remote device in the network 303 connected through the network. In some embodiments, the host runs PTP or gPTP when controlling the Ethernet PHY device 302. The host 304 provides control and configuration commands to the Ethernet PHY device 302 and may use any suitable communications protocol. As examples, such communications protocols include a serial peripheral interface (SPI) or any suitable type of media independent interface (MII), such as reduced MII (RMII), gigabit MII (GMII), reduced gigabit MII (RGMII), or the like, among others.

In some embodiments, the Ethernet PHY device 302 is implemented as an Ethernet PHY device 302 with a time stamping engine 306 that also generates and outputs a precision timing output signal 312, such as a 1PPS signal without the use of an application processor. This eliminates the need for a more expensive switch or a local applications processor associated with the circuit board 200 as shown in Fig. 2 or with each network node of the system. The Ethernet PHY device is a much simpler system than a full switch. The Ethernet PHY device 302 may be the same or different from the Ethernet PHY device 202 of Fig. 2 and may be on a similar or very different circuit board.

While embodiments herein are described in the context of Ethernet networks and PHY, the invention is not so limited. The methods and structures described herein may be applied to different network configurations and network protocols. Similarly, while the Ethernet PHY device outputs a 1PPS signal, any other type of reference timing signal may be used and presented instead.

The host data interface 314 sends data to the network 303 through a data transmitter that includes a transmit physical coding sublayer (PCS-TX) 316 and a transmit physical medium attachment (PMA-TX) 318. Similarly, data from the network 303 is received through a data receiver that includes a receive physical medium attachment (PMA-RX) 322 and a receive physical coding sublayer (PCS-RX) 324 to forward data to the host data interface 314. The PMA-TX 318 and PMA-RX 330 connect to the network 303 through a front end/hybrid 320 that is connected directly to the transmission medium of the network 303.

Data received from the network 303 arrives at the front end/hybrid 320 and is passed to the PMA-RX 322 which converts the analog signals received over the transmission medium to symbols. The PCS-RX 324 converts the symbols to bits and decodes and demultiplexes the symbols for the host data interface 314. The PCS-RX 324 forwards packets that require a time stamp to a time stamping engine 306. The packets are then forwarded to the appropriate end node, typically the host through a host data interface (I/F) 314. The time stamping engine 306 is coupled to the PCS-TX 316 to time stamp outgoing packets, to a 1PPS output generator 308 to provide precision timing to other components.

The PHY controller 326 may include an instruction processor and a memory or storage medium to execute computer-readable instructions that are stored in the memory. The 1PPS output generator 308 generates the precision timing output signal 312 for use by other external components, such as processors, interfaces, sensors, and other connected devices including the host 304. The precision timing output signal 312 is based on the timing of the time stamping engine 306. In some embodiments the 1PPS output generator 308 is a counter that creates the precision timing output signal 312 as a pulse after a preconfigured number of time stamping engine pulses.

In some embodiments, packets are sent and received from a grandmaster clock through the network 303 in accordance with a PTP or gPTP protocol. The sent packets have a time stamp from the time stamping engine 306 and receive a time stamp at the grandmaster clock. The received packets have a time stamp from the grandmaster clock and receive a time stamp upon receipt at the time stamping engine 306. The multiple time stamps may be used to determine precision timing at the host. Many other packets may be provided directly to the host through the host data interface 314 without receiving a time stamp from the time stamping engine 306.

The Ethernet PHY device 302 further may include a crystal oscillator/clock 340 to clock operations on the Ethernet PHY device 302, a phase locked loop (PLL) 328 to align timing for components within the Ethernet PHY device 302, and voltage inputs and voltage controls 342 to receive voltage inputs, control the received voltage inputs and distribute power throughout the Ethernet PHY device 302. The Ethernet PHY device 302 may be controlled by the host 304 in any suitable manner. In some embodiments, the data link 305 to the host 304 includes system management data that is coupled to a system management interface (SMI) 338 of the Ethernet PHY device 302. Additional configuration and reset controls may also be provided to configuration and reset controls 336 of the Ethernet PHY device. Through the SMI 338 and PHY controller 326, configuration and reset control parameters may be propagated through the Ethernet PHY device including PHY mode control 332 and top mode control and registers 334 to regulate the operation of the Ethernet PHY device 302. MDIO (Management Data Input/Output) may also be used by the host to control operations and parameters on the PHY.

Fig. 4 is a block diagram of a time stamping engine 406 suitable for use with the Ethernet PHY device of Fig. 3. The time stamping engine is augmented with precision timing components that may be used to support PTP or gPTP over the network 303. The time stamping engine 406 includes transmit time stamping logic 430 connected to a PCS-TX 416 to time stamp outgoing packets and receive time stamping logic 432 connected to a PCS-RX 424 to time stamp incoming data. The incoming and outgoing data are connected to a host data interface 414 that may use any suitable control and configuration protocol, system management interface, or media independent interface, such as RMII or MII. The transmit and receive time stamping logic 430, 432 are coupled to a time stamping timer/counter 434 that provides the timing information. In some embodiments, the time stamping engine 406 or the entire Ethernet PHY device 302 is dedicated to received data. A second time stamping engine 406 or Ethernet PHY device processes transmitted data. This may allow for higher date throughput in some configurations.

The time stamping counter/timer 434 also optionally provides timing to a 1PPS modulus counter(s) 438 which counts the timing from the time stamping counter/timer 434 and generates a 1PPS output signal 440 at 1 second intervals. The 1PPS output signal 440 is connected to a 1PPS output interface 408 that sends one or more 1PPS output signals to one or more timed nodes as described above. While the present description is presented in the context of a 1PPS output signal, any other precision timing signal with any other timing interval may be used instead. In some examples not falling under the scope of protection, there is no 1PPS modulus counter(s) 438 or 1PPS output interface 408 and the time stamping counter/timer 434 is used only to provide precision timing for the transmit and receive time stamping logic 430, 432.

Some precision timing protocols contemplate that the host determines the precision timing and adjusts, modifies, or changes time stamps for data received through an Ethernet PHY device to show the precision timing instead of the timing from the Ethernet PHY device. To accommodate such a configuration of the host, the time stamping engine may be modified so that the transmit and receive time stamping logic are coupled to a different timing source, such as the crystal oscillator/clock 340 or PLL 328 of the Ethernet PHY device. In such an embodiment, the precision time components of the time stamping engine are used to support a precision timing output signal such as a 1PPS output interface 408. A clock such as the time stamping PLL 436 is coupled to one or more counters to generate the 1PPS output signal 440 as a precision timing signal at the 1PPS output interface 408 independent of the host and any time stamping functions. Such an embodiment of the time stamping engine 406 may be identified as a precision timing reference or clock. The host may still be able to syntonize and synchronize the clock of the Ethernet PHY device in the same way as for time stamping.

The time stamping timer/counter 434 is controlled by a time stamping PLL 436 that is coupled to the time stamping counter timer/counter 434. The time stamping PLL 436 generates a timing reference signal 442 that acts as an accurate precision timing signal into the time stamping timer/counter. In some embodiments, the time stamping PLL 436 is a separate PLL in the time stamping engine 406 that only controls the time stamping engine. The separate time stamping PLL acts independently as a time stamping clock that allows the timing to be synchronized only to an appropriate reference clock source such as a grandmaster clock as defined in precision timing protocols. The time stamping PLL is independent of the Ethernet PHY device PLL and of the host clock. Therefore, the timing reference signal 442 controls the timing of the time stamping timer/counter 434 which controls the timing of the 1PPS modulus counter(s) 438. As a result, the 1PPS output interface 408 generates pulses that are also synchronized with a grandmaster clock independent and separate from any other clock except the time stamping PLL 436.

A PHY controller 426 is coupled to the host 304 as shown in Fig. 3 to receive timing and phase adjustment parameters. The PHY controller 426 is also coupled to the time stamping PLL 436 to provide the timing and phase adjustment parameters to the time stamping PLL 436. The PHY controller 426 is coupled to the time stamping timer/counter 434 to provide counts and timer/counter register adjustments from the host. The PHY controller 426 is coupled to the 1PPS modulus counter(s) 438 to provide counts, initial values and modulo values from the host.

Using any suitable communications protocol, such as MDIO, the host may provide adjustment commands to the time stamping engine 406 that can make small adjustments to the time stamping PLL 436 to syntonize its frequency and synchronize its phase with a timing reference, such as a grandmaster clock or with a harmonic relationship to the grandmaster clock. In some embodiments, these parameters are adjusted through the PHY controller 326. In some embodiments, working through a communications protocol, such as MDIO, the host may write parameter adjustments directly to the time stamping PLL 436, to the time stamping timer/counter 434, to the 1PPS modulus counter(s) 438, and other time stamping engine parameters which can be reset or otherwise controlled as necessary.

As shown, the time stamping timer/counter 434 is connected to the 1PPS modulus counter(s) 438 and feeds the 1PPS modulus counter(s) 438 with a timing signal. Using the input timing signal, the 1PPS modulus counter(s) 438 generates one or more 1PPS output signals 440 that each have a pulse at one second intervals or any other suitable interval that may be configured by the host. Each 1PPS output signal 440 may occur at a beginning of each second of a reference clock, such as a PTP grandmaster clock. Alternatively, each 1 PPS output signal 440 may begin at some fixed positive or negative delta, representing an advance or a delay, before or after the beginning of each second of the reference clock based on one or more configuration parameters set by the host.

Accordingly, using multiple configuration registers, each 1PPS output signal 440 may be individually set for a different specific positive or negative delta, representing an advance or a delay duration, relative to the reference clock as required by the overall needs of the intended end node, such as other electronics on the board.

The value of each delta may be adjusted such that the 1PPS outputs sent from the 1PPS output interface 408 arrive at the respective destination on a board or other subsystem at the same time taking into consideration the propagation delay of the 1PPS signals from the Ethernet PHY device and the time stamping PLL 436 to the respective receiving end node. By providing sufficient time resolution in the 1PPS modulus counter(s) 438 and by accurately measuring propagation delays, each end node may be precisely synchronized. The host may receive measurements and set the operational configuration and parameters of the 1PPS modulus counter(s) 438 using a communications protocol through the host data interface, such as SMII to the PHY controller 426 or another control entity of the Ethernet PHY device.

In some protocols, a timing pulse, such as a 1PPS output signal 440 is received based on a rising edge of the signal. In other protocols, a falling edge or a peak or some other aspect of a waveform may be used. Different end nodes may use different circuits to determine the timing and there may be variations in the signal waveform due to the propagation path and other factors. These effects may all cause different timing inaccuracies, some of which may be referred to as signal jitter. The jitter relative to the desired 1PPS timing for each output may also be compensated for in each 1PPS output signal 440. A relative accuracy may be programmed into the components of the Ethernet PHY device by setting parameters and registers through the SMI or any other communications protocol from the host.

The timing of the time stamping timer/counter 434 may be corrected by syntonizing the frequency of the time stamping timer/counter 434 with the grandmaster clock. The phase may also be corrected by synchronizing the phase of the time stamping timer/counter 434 with the grandmaster clock. In some embodiments, the host 304 uses the timestamped information from transmitted and received precision timing packets with the grandmaster clock, to determine how well the time stamping timer/counter 434 is syntonized and synchronized to the grandmaster. Having determined the accuracy of the time stamping timer/counter 434, the host can send commands to adjust the frequency and phase of the time stamping PLL 436, consequently adjusting the accuracy of the time stamping timer/counter 434. This process may be repeated until the syntonization and synchronization to the grand master meets the desired system timing accuracy requirements. The adjustment process may then be repeated on a periodic basis. In some embodiments, the host 304 is co-located with or directly connected to a timing master such as a GNSS receiver and adjusts the time stamping PLL 436 based on the directly connected timing master.

Using the time stamping PLL 436 together with the time stamping timer/counter 434 and the 1PPS modulus counter(s) 438, the time stamping engine 406 is able to generate output timing signals and data time stamps with high precision without any ongoing action from the host 304, the PHY controller 326 or any other processing resources of the system. This reduces cost and power consumption at the Ethernet PHY device 302, the host 304 and for the overall system. Precise timing may be provided throughout an in-vehicle network 100 or other type of network using Ethernet PHY devices similar to that shown and described herein instead of more complex and expensive switches. Precise timing from one or a few grand master clocks may be propagated throughout the network as described herein without the need for additional reference clocks, such as GNSS receivers.

While the host 304 or another processor periodically syntonizes and synchronizes the time stamping engine 406, this has a very small impact on the available processing resources. The time stamping engine may be adjusted by the host with a period of seconds or any other suitable interval, while the host may have a clock rate counted in nanoseconds or picoseconds. In alternative configurations, a host may generate the 1PPS signals and adjust the time stamps from each package received through a PHY. The host is able to do this using accurate timing that is known only to the host. By using a time stamping PLL 436 that is unique within the time stamping engine 406, as described herein, the host is no longer required to generate precision timing output signals 312 nor correct time stamps from the PHY.

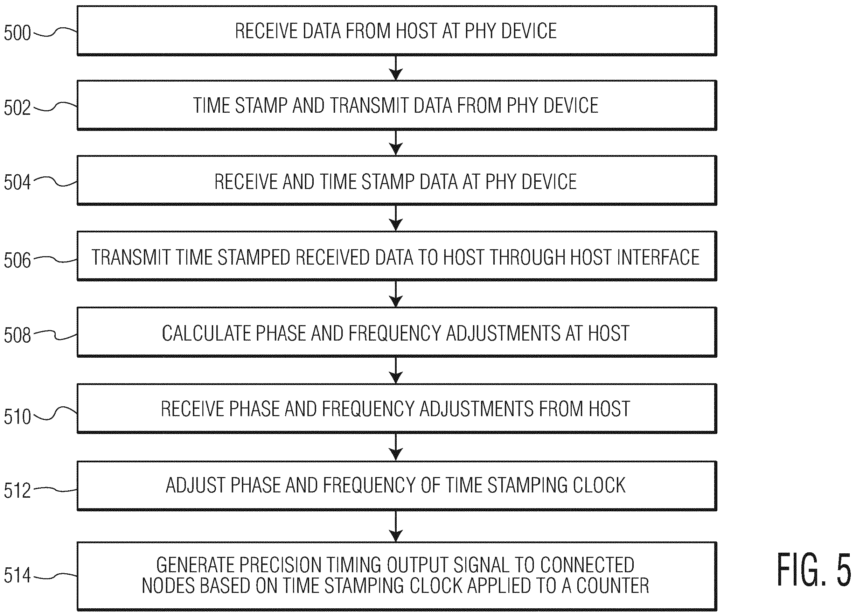

Figure 5 is a process flow diagram of operating an Ethernet PHY device to provide precision timing as described above. At 500, data are received from a host at a PHY device for transmission by the PHY device. At 502, data are time stamped and transmitted to network nodes from a PHY device. At 504, data are received from network nodes and time stamped at the PHY device. In some embodiments, these are in the form of Ethernet packets, but other data protocols and configurations may be used instead. The time stamps are based on a time stamping clock of a time stamping engine of the PHY device. The time stamping clock may be independent of the host clock and independent of the crystal oscillator and PLL of the PHY device.

At 506, the time stamped received data is transmitted to the host that is coupled to the PHY device through a host interface of the PHY device. The host may be a processor or controller on the same circuit board or even in the same integrated circuit package. The host may be coupled to other devices including sensors and other network nodes. The host may also be configured to control the PHY device through the host interface using any of a variety of different command, control, or management protocols.

At 506, the host calculates phase and frequency adjustment to apply to the time stamping clock. In some embodiments the host is able to determine precision timing by sending and receiving packets with a grandmaster clock or other reference timing source through the PHY device. With PTP, precision timing may be determined by sending a sequence of timestamped packets to the reference timing source and receiving timestamped replies. The host may also be able to determine precision timing by reference to a local reference timing source.

At 510, phase and frequency adjustments are received from the host through the host interface. These adjustments may be received as configuration commands or in another format depending on the control or management interface between the host and the PHY device. The configuration commands are derived by the host using the precision timing that was determined using the PTP or another basis for determining precision timing.

At 512, the phase and frequency of the time stamping clock are adjusted based on the received phase and frequency configuration commands. In some embodiments the commands are received as values to be written to registers of the time stamping engine. In some embodiments, the time stamping engine operates as a state machine and the phase and frequency of the time stamping clock is controlled by stored parameters. The time stamping clock may include a PLL and a counter/timer so that as the phase and frequency of the PLL is modified by configuration registers, the timing is subsequently modified in the counter/timer.

With periodic phase and frequency adjustments by the host, the time stamping clock may be syntonized and synchronized with any desired reference timing source. The time stamping clock maintains this syntonization and synchronization independent of a host clock, a PHY clock or any other clock. In this way the time stamps are aligned with the reference timing source independent of direct action by the host. The host is able to perform other functions and then check and adjust the phase and frequency only periodically.

At 514, a precision timing output signal is generated based on the time stamping clock as applied to a counter. The precision timing output signal may be transmitted to external nodes so that the external nodes are also syntonized and synchronized to the precision timing reference. In some embodiments, the PHY device includes a precision timing output interface coupled to a counter coupled to the time stamping clock. The counter may be a modulus counter(s) that counts timing pulses of the time stamping engine clock to determine a timing duration, such as 1 second of the timing reference. The modulus counter(s) may also be coupled to the host through the host interface to receive configuration commands including a modulus adjustment. The precision timing output signal may be sent to one or more local nodes and also to remote network nodes on the network. Multiple precision timing output signals may be generated for different nodes with different advances or delays to suit different external nodes.

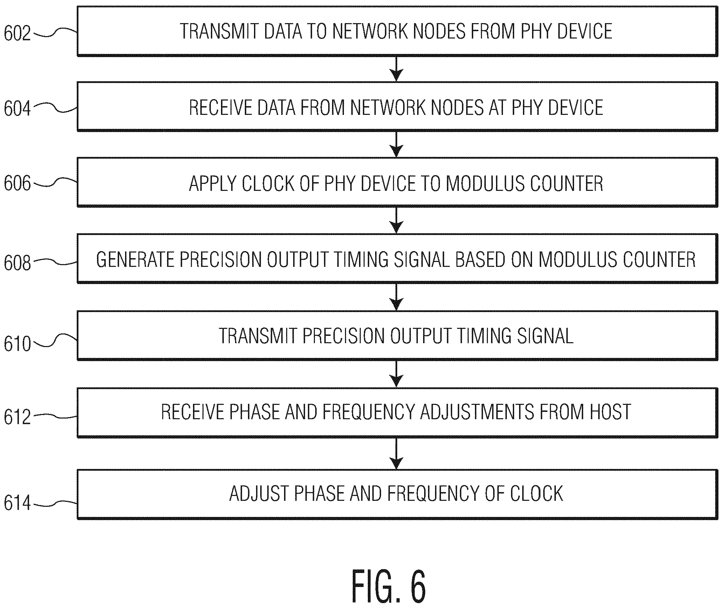

Figure 6 is an alternative process flow diagram of operating an Ethernet PHY device to provide precision timing as described above. At 602, data received from the host or another node is transmitted to network nodes from a PHY device. At 604, data are received from network nodes at the PHY device and transmitted to the host or other local devices. In some embodiments, these are in the form of Ethernet packets and are time stamped using a local clock or a precision independent clock. In some embodiments, the PHY device has only a transmitter or only a receiver.

At 606, a clock of the PHY device is applied to a modulus counter of the PHY device. The clock may be a precision PLL or any other clock. At 608, a precision output timing signal is generated based on the modulus counter. At 610, the precision timing output signal is transmitted to external nodes so that the external nodes are also syntonized and synchronized to the precision timing reference using the clock and the modulus counter of the PHY device. In some embodiments, the PHY device includes a precision timing output interface coupled to a counter coupled to the time stamping clock. The modulus counter(s) may be coupled to the host through the host interface to receive configuration commands including a modulus adjustment. Multiple precision timing output signals may be generated for different nodes with different advances or delays to suit different external nodes.

At 612, phase and frequency adjustments are received from the host through the host interface. These adjustments may be received as configuration commands or in another format depending on the control or management interface between the host and the PHY device. The configuration commands are derived by the host using the precision timing that was determined using the PTP or another basis for determining precision timing.

At 614, the phase and frequency of the clock are adjusted based on the received phase and frequency configuration commands. These commands may include adjustments to one or more modulus counters and advances or delays to one or more precision output timing signals.

As in the other examples above, the periodic phase and frequency adjustments by the host, syntonize and synchronize the clock on the PHY device with any desired reference timing source. The accuracy of the clock improves at each cycle and the adjustment cycles are repeated to obtain the desired accuracy and to maintain the desired accuracy independent of a host clock and without requiring the host to send reference timing signals directly or indirectly to other components on a board or system level.

Aspects of the above-described operations of the PHY device can be implemented in hardware, firmware, software, or a combination thereof. In an embodiment, the time stamping engine and the time stamping engine control and configuration is implemented with hardware logic circuits. In another embodiment, a PHY chip may include a PHY controller and a host controller that have an instruction processor and storage for instructions and parameters to implement the described functions through computer-readable instructions that are executed by the instruction processor.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer-useable storage medium for execution by a computer. As an example, an embodiment of a computer program product includes a computer-useable storage medium to store a computer-readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated..

## Claims

1. A physical layer, PHY, device (302) for a network (100), the PHY device comprising:
a transmitter (316, 318) configured to transmit data at the PHY device from a host (204, 304) to an external network (203, 303) that is external to the
PHY device; a clock of the PHY device (328, 340) to align timing for components within the PHY device ;
a host interface (314) configured to receive the data to transmit from the host (304) and configured to receive configuration commands from the host;
a time stamping engine (406) having a time stamping clock and configured to apply a time stamp to the data transmitted by the transmitter based on the time stamping clock,
the time stamping clock being independent of a host clock and coupled to the host interface to receive phase and frequency adjustments as configuration commands from the host to thereby adjust the phase and frequency of the time stamping based on the received configuration commands;
the time stamping engine further comprising a modulus counter (438) configured to count a preconfigured number of timing pulses of the clock;
wherein the time stamping engine (306) comprises a time stamping phase-locked loop, PLL, (436), coupled to the modulus counter (438), wherein the PLL (436) is configured provide a timing source that is independent of the clock (340) of the PHY device; and
a timing output interface (408) coupled to the modulus counter (438) to produce a precision timing output signal (312) based on detecting the preconfigured number of timing pulses of the clock.

2. The PHY device (302) of claim 1, wherein the timing output interface (408) is configured to be coupled to an end node (206, 208, 210) and wherein there is a propagation delay of the precision timing output signal (312) from the timing output interface (408) to the end node (206, 208, 210) and wherein the timing output interface is configured to be coupled to the host interface (314) to
receive a phase adjustment as a configuration command from the host (204, 304) to thereby compensate for the propagation delay.

3. The PHY device of claim 1, wherein the modulus counter is further configured to determine a timing duration for the precision timing output signal.

4. The PHY device of claim 3, wherein the timing duration is one second and the precision output timing signal is a one pulse per second, 1PPS, timing reference signal.

5. The PHY device (302) of claim 3 or 4, wherein the modulus counter (438) is coupled to the host interface (314) to receive a modulus adjustment as a configuration command from the host (204, 304).

6. The PHY device (302) of any preceding claim, wherein the clock (340) further comprises a phase-locked loop (328) and a timer/counter.

7. The PHY device (302) of any of claims 1-5, further comprising a device phase-locked loop, PLL, (328) coupled to the transmitter (316, 318) and the host interface (314).

8. The PHY device (302) of any preceding claim, wherein the PHY device is configured to be coupled to a grandmaster clock, wherein the phase and frequency adjustments from the host (304) are generated by the host based on a precision timing protocol conducted through the PHY device between the host and the grandmaster clock.

9. The PHY device (302) of claim 8, wherein the phase and frequency adjustments are received on a serial media-independent interface.

10. The PHY device (302) of claim 8 or 9, wherein the host interface (314) comprises a system management interface (338) and wherein the phase and
frequency adjustments are received through the system management interface as parameter adjustments to thereby adjust the phase and frequency of the clock (340).

11. A method of determining timing on a network comprising:
transmitting (602) data to network nodes from a PHY device;
receiving (604) data from the network nodes at the PHY device;
generating, by a phase-locked-loop (436), PLL, a timing source that is independent of the clock (340) of the PHY device;
the PLL further providing a time stamping clock;
applying (606) the timing source to a modulus counter of the PHY device configured to count a preconfigured number of timing pulses of the clock;
generating (608) a precision output timing signal based on detecting the preconfigured number of timing pulses of the clock;
transmitting (610) the precision output timing signal to external nodes, external to the PHY device;
receiving (612) phase and frequency adjustments as configuration commands at the PHY device from a host through a host interface;
time stamping the transmitted data based on the time stamping clock of the PHY device; time stamping the received data based on the time stamping clock of the PHY device; and
transmitting the time stamped received data to the host through the host interface; and
adjusting (614) the phase and frequency of the PLL based on the received configuration commands.

12. The method of claim 12, further comprising advancing the precision output timing signal in response to a configuration command from the host through the host interface.

## Patentansprüche

1. Vorrichtung (302) einer Datenübertragungsschicht, PHY-Vorrichtung, für ein Netzwerk (100), wobei die PHY-Vorrichtung umfasst:
einen Sender (316, 318) der konfiguriert ist zum Senden von Daten in der PHY-Vorrichtung von einem Host (204, 304) zu einem externen Netzwerk (203, 303), das extern für die PHY-Vorrichtung ist; wobei ein Taktgeber der PHY-Vorrichtung (328, 340) geeignet ist, um eine Zeitsteuerung für Komponenten innerhalb der PHY-Vorrichtung zu justieren;
eine Host-Schnittstelle (314), die konfiguriert ist zum Empfangen der von dem Host (304) zu sendenden Daten und konfiguriert ist zum Empfangen von Konfigurationsbefehlen von dem Host;
eine Zeitmarkierungs-Engine (406), die einen Zeitmarkierungstaktgeber aufweist und konfiguriert ist, um, basierend auf dem Zeitmarkierungstaktgeber, eine Zeitmarke an den Daten anzubringen, die von dem Sender gesendet werden,
wobei der Zeitmarkierungstaktgeber unabhängig von einem Host-Taktgeber ist und mit der Host-Schnittstelle gekoppelt ist, um Phasen- und Frequenzanpassungen als Konfigurationsbefehle von dem Host zu empfangen, um dadurch die Phase und die Frequenz der Zeitmarkierung basierend auf den empfangenen Konfigurationsbefehlen anzupassen;
wobei die Zeitmarkierungs-Engine ferner einen Modulus-Zähler (438) umfasst, der konfiguriert ist zum Zählen einer vorkonfigurierten Anzahl von Zeitsteuerungsimpulsen des Taktgebers;
wobei die Zeitmarkierungs-Engine (306) eine Phasenregelschleife, PLL, (436) für Zeitmarkierungen umfasst, die mit dem Modulus-Zähler (438) gekoppelt ist, wobei die PLL (436) konfiguriert ist zum Bereitstellen einer Zeitsteuerungsquelle, die unabhängig von dem Taktgeber (340) der PHY-Vorrichtung ist; und
eine Zeitsteuerungsausgabeschnittstelle (408), die mit dem Modulus-Zähler (438) gekoppelt ist, um ein Ausgabesignal (312) einer Präzisionszeitsteuerung basierend auf einem Erkennen der vorkonfigurierten Anzahl von Zeitsteuerungsimpulsen des Taktgebers zu produzieren.

2. PHY-Vorrichtung (302) nach Anspruch 1, wobei die Zeitsteuerungsausgabeschnittstelle (408) konfiguriert ist, um mit einem Endknoten (206, 208, 210) gekoppelt zu werden, und wobei eine Ausbreitungsverzögerung des Ausgabesignals (312) der Präzisionszeitsteuerung von der Zeitsteuerungsausgabeschnittstelle (408) zu dem Endknoten (206, 208, 210) vorhanden ist, und wobei die Zeitsteuerungsausgabeschnittstelle konfiguriert ist, um mit der Host-Schnittstelle (314) gekoppelt zu werden, um eine Phasenanpassung als einen Konfigurationsbefehl von dem Host (204, 304) zu empfangen, um dadurch die Ausbreitungsverzögerung zu kompensieren.

3. PHY-Vorrichtung nach Anspruch 1, wobei der Modulus-Zähler ferner konfiguriert ist zum Ermitteln einer Zeitsteuerungsdauer für das Ausgabesignal der Präzisionszeitsteuerung.

4. PHY-Vorrichtung nach Anspruch 3, wobei die Zeitsteuerungsdauer eine Sekunde beträgt und wobei das Zeitsteuerungssignal der Präzisionsausgabe ein Zeitsteuerungsreferenzsignal mit einem Impuls pro Sekunde, 1 PPS, ist.

5. PHY-Vorrichtung (302) nach Anspruch 3 oder 4, wobei der Modulus-Zähler(438) mit der Host-Schnittstelle (314) gekoppelt ist, um eine Modulus-Anpassung als einen Konfigurationsbefehl von dem Host (204, 304) zu empfangen.

6. PHY Vorrichtung (302) nach einem der vorhergehenden Ansprüche, wobei der Taktgeber (340) ferner eine Phasenregelschleife (328) und einen Zeitgeber/Zähler umfasst.

7. PHY-Vorrichtung (302) nach einem der Ansprüche 1 bis 5, die ferner eine Phasenregelschleife, PLL, (328) einer Vorrichtung umfasst, die mit dem Sender (316, 318) und der Host-Schnittstelle (314) gekoppelt ist.

8. PHY Vorrichtung (302) nach einem der vorhergehenden Ansprüche, wobei die PHY-Vorrichtung konfiguriert ist, um mit einem Grandmaster-Taktgeber gekoppelt zu werden, wobei
die Phasen- und Frequenzanpassungen von dem Host (304) durch den Host basierend auf einem Präzisionszeitsteuerungsprotokoll erzeugt wird, das durch die PHY-Vorrichtung zwischen dem Host und dem Grandmaster-Taktgeber eingesetzt wird.

9. PHY-Vorrichtung (302) nach Anspruch 8, wobei die Phasen- und Frequenzanpassungen in einer seriellen medienunabhängigen Schnittstelle empfangen werden.

10. PHY-Vorrichtung (302) nach Anspruch 8 oder 9, wobei die Host-Schnittstelle (314) eine Systemverwaltungsschnittstelle (338) umfasst und wobei die Phasen- und Frequenzanpassungen durch die Systemverwaltungsschnittstelle als Parameteranpassungen empfangen werden, um dadurch die Phase und die Frequenz des Taktgebers (340) anzupassen.

11. Verfahren zum Ermitteln einer Zeitsteuerung in einem Netzwerk, umfassend:
Senden (602) von Daten von einer PHY-Vorrichtung zu mehreren Netzwerkknoten;
Empfangen (604) von Daten von den Netzwerkknoten in der PHY-Vorrichtung;
Erzeugen, durch eine Phasenregelschleife (436), PLL, einer Zeitsteuerungsquelle, die unabhängig von dem Taktgeber (340) der PHY-Vorrichtung ist;
wobei die PLL ferner einen Zeitmarkierungstaktgeber bereitstellt;
Anwenden (606) der Zeitsteuerungsquelle auf einen Modulus-Zähler der PHY-Vorrichtung, die konfiguriert ist zum Zählen einer vorkonfigurierten Anzahl von Zeitsteuerungsimpulsen des Taktgebers;
Erzeugen (608) eines Zeitsteuerungssignals einer Präzisionsausgabe basierend auf einem Erkennen der vorkonfigurierten Anzahl von Zeitsteuerungsimpulsen des Taktgebers;
Senden (610) des Zeitsteuerungssignals einer Präzisionsausgabe zu externen Knoten, die extern für die PHY-Vorrichtung sind;
Empfangen (612), in der PHY-Vorrichtung, von Phasen- und Frequenzanpassungen als Konfigurationsbefehle von einem Host durch eine Host-Schnittstelle;
Markieren mit einem Zeitstempel der gesendeten Daten basierend auf dem Zeitmarkierungstaktgeber der PHY-Vorrichtung; Markieren mit einem Zeitstempel der empfangenen Daten basierend auf dem Zeitmarkierungstaktgeber der PHY-Vorrichtung; und
Senden der zeitmarkierten empfangenen Daten durch die Host-Schnittstelle zu dem Host; und
Anpassen (614) der Phase und der Frequenz der PLL basierend auf den empfangenen Konfigurationsbefehlen.

12. Verfahren nach Anspruch 12, das ferner ein Weiterleiten des Zeitsteuerungssignals der Präzisionsausgabe als Reaktion auf einen Konfigurationsbefehl von dem Host durch die Host-Schnittstelle umfasst.

## Revendications

1. Dispositif de la couche physique, notée PHY, (302) pour un réseau (100), le dispositif PHY comprenant :
un émetteur (316, 318) configuré pour transmettre des données au niveau du dispositif PHY en provenance d'un hôte (204, 304) à un réseau externe (203, 303) qui est externe au dispositif PHY ; une horloge du dispositif PHY (328, 340) servant à aligner la synchronisation pour des composants au sein du dispositif PHY ;
une interface d'hôte (314) configurée pour recevoir les données à transmettre en provenance de l'hôte (304) et configurée pour recevoir des commandes de configuration depuis l'hôte ;
un moteur d'horodatage (406) doté d'une horloge d'horodatage et configuré pour appliquer un horodatage aux données transmises par l'émetteur sur la base de l'horloge d'horodatage,
l'horloge d'horodatage étant indépendante d'une horloge d'hôte et couplée à l'interface d'hôte pour recevoir, comme commandes de configuration, des ajustements de phase et de fréquence depuis l'hôte de manière à ajuster la phase et la fréquence de l'horodatage sur la base des commandes de configuration reçues ;
le moteur d'horodatage comprenant en outre un compteur modulo (438) configuré pour compter un nombre préconfiguré d'impulsions de synchronisation de l'horloge ;
le moteur d'horodatage (306) comprenant une boucle à verrouillage de phase, notée PLL, d'horodatage (436), couplée au compteur modulo (438), la PLL (436) étant configurée pour fournir une source de synchronisation indépendante de l'horloge (340) du dispositif PHY ; et
une interface de sortie de synchronisation (408) couplée au compteur modulo (438) pour produire un signal de sortie de synchronisation de précision (312) sur la base de la détection du nombre préconfiguré d'impulsions de synchronisation de l'horloge.

2. Dispositif PHY (302) selon la revendication 1, l'interface de sortie de synchronisation (408) étant configurée pour être couplée à un nœud d'extrémité (206, 208, 210), et le signal de sortie de synchronisation de précision (312) présentant un temps de propagation de l'interface de sortie de synchronisation (408) au nœud d'extrémité (206, 208, 210), et l'interface de sortie de synchronisation étant configurée pour être couplée à l'interface d'hôte (314) pour
recevoir, comme commande de configuration, un ajustement de phase depuis l'hôte (204, 304) de manière à compenser le temps de propagation.

3. Dispositif PHY selon la revendication 1, le compteur modulo étant configuré en outre pour déterminer une durée de synchronisation pour le signal de sortie de synchronisation de précision.

4. Dispositif PHY selon la revendication 3, la durée de synchronisation étant d'une seconde et le signal de synchronisation de sortie de précision étant un signal de référence de synchronisation d'une impulsion par seconde, notée 1PPS.

5. Dispositif PHY (302) selon la revendication 3 ou 4, le compteur modulo (438) étant couplé à l'interface d'hôte (314) pour recevoir, comme commande de configuration, un ajustement de modulo depuis l'hôte (204, 304).

6. Dispositif PHY (302) selon l'une quelconque des revendications précédentes, l'horloge (340) comprenant en outre une boucle à verrouillage de phase (328) et un temporisateur/compteur.

7. Dispositif PHY (302) selon l'une quelconque des revendications 1 à 5, comprenant en outre une boucle à verrouillage de phase, notée PLL, de dispositif (328) couplée à l'émetteur (316, 318) et à l'interface d'hôte (314).

8. Dispositif PHY (302) selon l'une quelconque des revendications précédentes, le dispositif PHY étant configuré pour être couplé à une horloge "grandmaster", les ajustements de phase et de fréquence en provenance de l'hôte (304) étant générés par l'hôte sur la base d'un protocole de synchronisation de précision mis en œuvre par le biais du dispositif PHY entre l'hôte et l'horloge "grandmaster".

9. Dispositif PHY (302) selon la revendication 8, les ajustements de phase et de fréquence étant reçus sur une interface série indépendante du support.

10. Dispositif PHY (302) selon la revendication 8 ou 9, l'interface d'hôte (314) comprenant une interface de gestion système (338), et les ajustements de phase et de fréquence étant reçus par le biais de l'interface de gestion système comme ajustements de paramètres de manière à ajuster la phase et la fréquence de l'horloge (340).

11. Procédé de détermination de la synchronisation sur un réseau, comprenant :
la transmission (602) de données à des nœuds de réseau depuis un dispositif PHY ;
la réception (604) de données depuis les nœuds de réseau au niveau du dispositif PHY ;
la génération, par une boucle à verrouillage de phase, notée PLL, (436), d'une source de synchronisation qui est indépendante de l'horloge (340) du dispositif PHY ;
la PLL fournissant en outre une horloge d'horodatage ;
l'application (606) de la source de synchronisation à un compteur modulo du dispositif PHY configuré pour compter un nombre préconfiguré d'impulsions de synchronisation de l'horloge ;
la génération (608) d'un signal de synchronisation de sortie de précision sur la base de la détection du nombre préconfiguré d'impulsions de synchronisation de l'horloge ;
la transmission (610) du signal de synchronisation de sortie de précision à des nœuds externes qui sont externes au dispositif PHY ;
la réception (612), comme commandes de configuration, d'ajustements de phase et de fréquence au niveau du dispositif PHY depuis un hôte par le biais d'une interface d'hôte ;
l'horodatage des données transmises sur la base de l'horloge d'horodatage du dispositif PHY ; l'horodatage des données reçues sur la base de l'horloge d'horodatage du dispositif PHY ; et
la transmission des données reçues horodatées à l'hôte par le biais de l'interface d'hôte ; et
l'ajustement (614) de la phase et de la fréquence de la PLL sur la base des commandes de configuration reçues.

12. Procédé selon la revendication 12, comprenant en outre l'avance du signal de synchronisation de sortie de précision en réponse à une commande de configuration en provenance de l'hôte par le biais de l'interface d'hôte.
